(19) Europäisches Patentamt
European Patent Office
Office européen des brevets

(11) **EP 4 653 816 A1**

(12) **EUROPEAN PATENT APPLICATION**
published in accordance with Art. 153(4) EPC

(43) Date of publication:
26.11.2025 Bulletin 2025/48

(51) International Patent Classification (IPC):
*G01C 21/28* (2006.01)    *G01C 21/16* (2006.01)
*G01C 21/18* (2006.01)

(21) Application number: 23917071.5

(22) Date of filing: 26.09.2023

(86) International application number:
PCT/CN2023/121327

(87) International publication number:
WO 2024/152603 (25.07.2024 Gazette 2024/30)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.01.2023 CN 202310081994

(71) Applicant: Huizhou Desay SV Automotive Co., Ltd.
Huizhou, Guangdong 516006 (CN)

(72) Inventors:
• LU, Wei
Huizhou, Guangdong 516006 (CN)
• WANG, Dexiang
Huizhou, Guangdong 516006 (CN)
• CHEN, Qingye
Huizhou, Guangdong 516006 (CN)

(74) Representative: Cabinet Chaillot
16/20, avenue de l'Agent Sarre
B.P. 74
92703 Colombes Cedex (FR)

(54) **MULTI-DATA FUSION-BASED VEHICLE POSITIONING METHOD, SYSTEM AND VEHICLE TERMINAL**

(57) The present invention provides a vehicle positioning method and system based on multi-data fusion, and a vehicle terminal. The method includes the following steps: calculating a first vehicle body change angle through a wheel speed pulse signal, calculating a second vehicle body change angle through a steering wheel signal, and calculating a third vehicle body change angle through an inertial measurement unit; performing data fusion on the second vehicle body change angle and the third vehicle body change angle to obtain a fused change angle; performing, when data of the first vehicle body change angle is refreshed, filtering correction on the fused change angle through the first vehicle body change angle to obtain a filtering coefficient, and calculating a current vehicle body angle according to a vehicle body angle of a previous moment; and calculating a current vehicle body position of a vehicle according to a vehicle body position of the previous moment, the vehicle body angle of a current moment, and a vehicle driving distance. According to the present invention, various data is fused first and then subjected to filtering, which can greatly improve the data reliability of a vehicle change angle and avoid errors of different data sources. Thus, the accuracy of vehicle positioning is effectively improved.

Calculate a first vehicle body change angle through a wheel speed pulse signal, calculate a second vehicle body change angle through a steering wheel signal, and calculate a third vehicle body change angle through an inertial measurement unit — 110

Perform data fusion on the second vehicle body change angle and the third vehicle body change angle to obtain a fused change angle — 120

Perform, when data of the first vehicle body change angle is refreshed, filtering correction on the fused change angle through the first vehicle body change angle to obtain a filtering coefficient, and calculate a current vehicle body angle according to a vehicle body angle of a previous moment — 130

Calculate a current vehicle body position of a vehicle according to a vehicle body position of the previous moment, the vehicle body angle of a current moment, and a vehicle driving distance — 140

FIG. 2

**Description**

<u>**TECHNICAL FIELD**</u>

The present invention belongs to the technical field of intelligent driving, and particularly relates to a vehicle positioning method and system based on multi-data fusion.

<u>**BACKGROUND**</u>

With the high-speed development of intelligent driving, the automatic parking function of a car is more and more popular. While the automatic parking function brings convenience to human beings, there are also some problems with poor experience, such as skewing and rolling on the traffic line. The fundamental reason is that vehicle positioning data in the process of automatic parking is not accurate enough, the data including coordinates of a vehicle body, the heading angle of a vehicle and so on.

In the prior art, generally, when a vehicle body is positioned, most of the technical solutions are obtained only through one kind of data, for example, the position of the vehicle body is calculated through a wheel speed pulse signal. Although this positioning method is accurate, the data update frequency thereof is low due to the limitation of the identification frequency of a Hall sensor, resulting in fluctuating data reliability when the vehicle body is positioned in this way. In addition, there is a way to position the vehicle body by calculating the angle of the vehicle body through a steering wheel signal and combing the angle with the vehicle body driving length. However, since this method is iterative calculation of data, there will be error superposition after a long time of calculation, resulting in increasingly unreliable data. Some vehicles are provided with an inertial measurement unit (IMU) which calculates the motion trajectory of the vehicles by accumulating acceleration and rotation angles so as to position the vehicle body. However, data jump may occur during the calculation.

Therefore, the key for the existing technologies is how to determine the change angle of a vehicle body. Due to the problems of update frequency, error accumulation and data jump, the angle calculation is prone to being inaccurate, making the automatic parking failed. When using the parking function, users will have a psychological feeling that the function is worse than parking by themselves, which is not conducive to the development of intelligent driving.

Therefore, it is necessary to provide a positioning algorithm based on multi-data fusion.

<u>**SUMMARY**</u>

The present invention provides a vehicle positioning method based on multi-data fusion, which solves the problem of inaccurate vehicle positioning caused by data refresh frequency, error accumulation, data jump and other phenomena.

The present invention provides a vehicle positioning method based on multi-data fusion. The method includes the following steps:

calculating a first vehicle body change angle through a wheel speed pulse signal, calculating a second vehicle body change angle through a steering wheel signal, and calculating a third vehicle body change angle through an inertial measurement unit; performing data fusion on the second vehicle body change angle and the third vehicle body change angle to obtain a fused change angle; performing, when data of the first vehicle body change angle is refreshed, filtering correction on the fused change angle through the first vehicle body change angle to obtain a filtering coefficient, and calculating a current vehicle body angle according to a vehicle body angle of a previous moment; and calculating a current vehicle body position of a vehicle according to a vehicle body position of the previous moment, the vehicle body angle of a current moment, and a vehicle driving distance.

The performing, when data of the first vehicle body change angle is refreshed, filtering correction on the fused change angle through the first vehicle body change angle to obtain a corrected vehicle body change angle includes the following substeps:

determining a data refresh period of the first vehicle body change angle; calculating, at a first moment of a current refresh period, to obtain a latest first vehicle body change angle; calculating a sum of the fused change angles within the refresh period; and determining the filtering coefficient according to a ratio of the latest first vehicle body change angle to the sum of the fused change angles.

Optionally, the calculating a current vehicle body angle according to a vehicle body angle of a previous moment includes:
integrating products of the fused change angles from the previous moment to the current moment and the filtering coefficient by adopting an integration function.

Further, $\theta_{t1} = \theta_{t0} + \int_{t0}^{t1} p * \Delta\theta$,

where P denotes the filtering coefficient, $\theta_{t1}$ denotes the current vehicle body angle, and $\theta_{t0}$ denotes the vehicle body angle of the previous moment; when the data of the first vehicle body change angle $\Delta rad_1$ is refreshed, the filtering coefficient is:

$$P = \Delta rad_1 / \int_{t2}^{t1} \Delta\theta,$$

where t1 denotes the current moment, and t2 denotes a moment when the data of the first vehicle body change angle is refreshed last time; and when the data of the first vehicle body change angle is not refreshed, the filtering coefficient is:

$$P=1.$$

Optionally, the performing data fusion on the second vehicle body change angle and the third vehicle body change angle to obtain a fused change angle includes the following substeps:

determining whether the third vehicle body change angle jumps;
if yes, taking the second vehicle body change angle as the fused change angle; otherwise, calculating relative deviations of the second vehicle body change angle and the third vehicle body change angle;
calculating, according to the relative deviations, weights of the second vehicle body change angle and the third vehicle body change angle respectively; and
calculating a weighted average value of the second vehicle body change angle and the third vehicle body change angle to obtain the fused change angle.

Optionally, the calculating a first vehicle body change angle through a wheel speed pulse signal includes the following steps:

calculating driving distances of a left wheel and a right wheel of the vehicle through the wheel speed pulse signal;
calculating a driving distance difference between the driving distance of the left wheel and the driving distance of the right wheel;
acquiring a wheel track between the left wheel and the right wheel; and
calculating a ratio of the driving distance difference to the wheel track to obtain the first vehicle body change angle.

Optionally, the calculating a second vehicle body change angle through a steering wheel signal includes the following steps:

calculating a steering radius through a steering angle sensor of a steering wheel and front and rear tracks;
acquiring a vehicle body driving length; and
calculating to obtain the second vehicle body change angle based on the driving length and the steering radius.

Optionally, the calculating a third vehicle body change angle through an inertial measurement unit includes the following steps:

calculating a yaw rate through the inertial measurement unit; and
calculating the third vehicle body change angle according to the yaw rate and a unit measurement time.

Optionally, the calculating a current vehicle body position of a vehicle according to a vehicle body position of the previous moment, the vehicle body angle of a current moment, and a vehicle driving distance includes:

calculating a vehicle driving length within the unit measurement time;
calculating an angle average value of the vehicle body angle of the previous moment and the vehicle body angle of the current moment; and
calculating current coordinates of the vehicle body through a trigonometric function based on the vehicle body position of the previous moment, the angle average value and the vehicle driving length.

In addition, the present invention provides a vehicle positioning system based on multi-data fusion. The system includes:

a wheel speed pulse calculation unit, configured to calculate a first vehicle body change angle through a driving length difference between wheels on both sides of a vehicle body;
a steering wheel angle calculation unit, configured to calculate a second vehicle body change angle through a steering wheel signal;
an inertial measurement unit, configured to measure a third vehicle body change angle; and
a fusion calculation unit, configured to perform data fusion on the second vehicle body change angle and the third vehicle body change angle, and perform filtering correction on a fused change angle obtained after the fusion through the first vehicle body change angle to obtain an accurate vehicle body change angle,
wherein the fusion calculation unit is further configured to calculate a current vehicle body position of a vehicle according to the vehicle body change angle and a vehicle body position of a previous moment.

The present invention further provides a vehicle terminal. The vehicle terminal includes a memory, a processor and a data processing program stored on the memory and capable of running on the processor, and the data processing program, when executed by the processor, implements the vehicle positioning method based on multi-data fusion described above.

In the embodiments of the present invention, a plurality of vehicle body change angles are obtained by calculation through the steering wheel signal and the inertial measurement unit and subjected to data fusion, and are corrected through the wheel speed pulse signal, so that the data reliability of the vehicle change angle can be greatly improved, and errors caused by different data sources are avoided. Thus, the accuracy of vehicle positioning is effectively improved.

## BRIEF DESCRIPTION OF DRAWINGS

FIG. 1 is a schematic diagram of a vehicle positioning model according to an embodiment of the present invention.
FIG. 2 is a flow diagram of a vehicle positioning method based on multi-data fusion according to an embodiment of the present invention.
FIG. 3 is a flow diagram of fusion of a second vehicle body change angle and a third vehicle body change angle according to an embodiment of the present invention.
FIG. 4 is a flow diagram of filtering a fused change angle through a first vehicle body change angle according to an embodiment of the present invention.
FIG. 5 is a flow diagram of calculating a first vehicle body change angle through a wheel speed pulse signal according to an embodiment of the present invention.
FIG. 6 is a schematic diagram of a geometric model for calculating a change angle based on a pulse wheel speed according to an embodiment of the present invention.
FIG. 7 is a flow diagram of calculating a first vehicle body change angle through a steering wheel signal according to an embodiment of the present invention.
FIG. 8 is a schematic diagram of a geometric model for calculating a change angle through a steering wheel signal according to an embodiment of the present invention.
FIG. 9 is a flow diagram of calculating a first vehicle body change angle through an inertial measurement unit according to an embodiment of the present invention.
FIG. 10 is a schematic structural diagram of a vehicle positioning system based on multi-data fusion according to Embodiment 2 of the present invention.

## DETAILED DESCRIPTION OF EMBODIMENTS

In order to make the objects, technical solutions and advantages of the present invention more clear, the present invention is further described in detail below with reference to the accompanying drawings and the embodiments. It is to be understood that the specific embodiments described herein are merely illustrative of the present invention, and are not intended to limit the present invention.

Methods disclosed in the embodiments of the present invention may be used in the fields of automatic parking, assisted parking or automatic driving, etc., and are mainly applicable to the accurate calculation of vehicle positioning information.

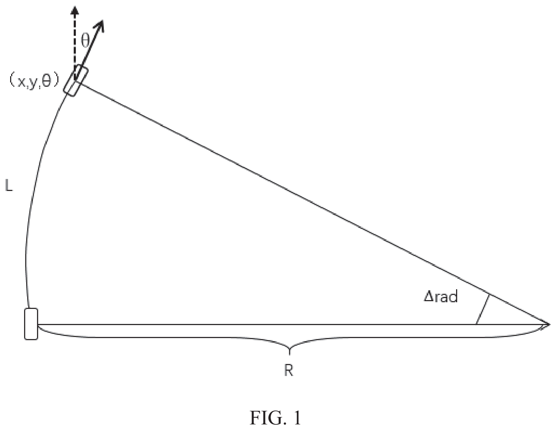

FIG. 1 shows a vehicle positioning model according to an embodiment of the present invention. When a vehicle designed according to Ackermann steering geometry makes turns along a curve, the steering angle of wheels on the inner side is made to be approximately 2 to 4 degrees greater than that of wheels on the outer side by means of equal cranking of four-links, so that the centers of the circles of paths of the four wheels meet roughly at the center of instantaneous steering on the extension of a rear axle, allowing the vehicle to make smooth turns. Positioning information includes the coordinates of a vehicle body in the world coordinate system, the vehicle body angle, etc. It is to be noted that the world coordinate system is a three-dimensional orthogonal rectangular coordinate system. In the positioning process, in order to simplify the calculation, the default z-axis coordinate of the vehicle is 0, and the positioning coordinates of the vehicle body are determined by the X-axis and Y-axis coordinates. In view of the size of the vehicle, it is generally considered that the central point coordinates of a vehicle are the position coordinates of the vehicle.

In term of the vehicle body angle, the bending center corresponding to the path arc of the vehicle in the turning process is taken as the origin, and the curvature corresponding to the path arc of the vehicle between two moments is the vehicle body change angle.

Therefore, the vehicle positioning information in the embodiments of the present invention is preferably (x, y, 0), where x denotes the horizontal coordinate of the vehicle in the world coordinate system, y denotes the longitudinal coordinate of the vehicle in the world coordinate system, and θ denotes the vehicle body angle.

Embodiment 1:

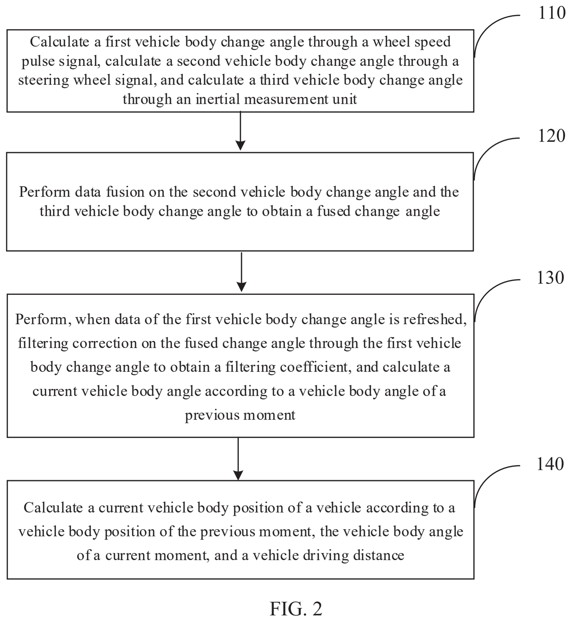

FIG. 2 shows the flow of a vehicle positioning method based on multi-data fusion according to an embodiment of the present invention.

The vehicle positioning method based on multi-data fusion includes the following steps.

Step 110, calculate a first vehicle body change angle through a wheel speed pulse signal, calculate a second vehicle body change angle through a steering wheel signal, and calculate a third vehicle body change angle through an inertial measurement unit.

In the embodiments of the present invention, the variation of the vehicle body angle in a unit time period is measured from three aspects: the wheel speed pulse signal, the steering wheel signal and the inertial measurement unit.

Specifically, in terms of the wheel speed pulse signal, since the four wheels of the vehicle have different driving distances in the turning process, the first vehicle body change angle may be determined in the calculation process according to the driving distance difference between the wheels and the trigonometric function relationship. In the embodiment of the present invention, the wheel speed pulse signal may be obtained through rotor fit and calculation of a Hall sensor and wheel speed sensors arranged on the wheels.

In terms of calculating the vehicle body change angle through the steering wheel signal, vehicle steering is controlled by a steering wheel, and because of the wheel track of the vehicle, the relationship between the rotation angle of the steering wheel and the deflection angle of the steering wheel is fixed. Therefore, the steering radius may be determined as long as the rotation angle of the steering wheel is obtained, and then the second vehicle body change angle may be determined in combination with the driving distance of the vehicle body.

In terms of the inertial measurement unit, the inertial measurement unit generally includes a gyroscope, an accelerant and an algorithm processing unit, and obtains the motion trajectory by measuring the acceleration and the rotation angle. During calculation of the vehicle body change angle, the yaw angle of the vehicle is measured at every moment by the inertial measurement unit, and accumulates to finally obtain the total change angle in the unit time, so that the third vehicle body change angle is obtained.

The value of the vehicle body change angle may be output in the form of angle value or radian value. In the embodiment of the present invention, the value is output as radian value.

Step 120, perform data fusion on the second vehicle body change angle and the third vehicle body change angle to obtain a fused change angle.

The data fusion of the second vehicle body change angle and the third vehicle body change angle may be achieved through different methods, for example, the weighted average method, the neural network algorithm, and Kalman filter evaluation. The methods may be selected according to the characteristics of the second vehicle body change angle and the third vehicle body change angle.

Specifically, since the second vehicle body change angle is prone to error accumulation, the third vehicle body change angle may jump, and thus the second vehicle body change angle may be modified using the third vehicle body change angle after long-term calculation, or the weight, confidence and the like of the second vehicle body change angle may be reduced. In addition, the second vehicle body change angle may also be modified through the neural network algorithm based on the deviation between a predicted value and a measured value.

Therefore, it is understandable that the fusion of the second vehicle body change angle and the third vehicle body change angle is to reduce errors caused by respective data characteristics, so as to obtain more reliable fusion data and form the fused change angle.

Step 130, perform, when data of the first vehicle body change angle is refreshed, filtering correction on the fused change angle through the first vehicle body change angle to obtain a filtering coefficient, and calculate a current vehicle body angle according to a vehicle body angle of a previous moment.

In order to obtain a more accurate vehicle body change angle, in the embodiment of the present invention, filtering is further performed on the basis of data fusion. The first vehicle body change angle has the highest accuracy at the moment of data refresh. However, due to the low data refresh frequency of the first vehicle body change angle, the confidence of the first vehicle body change angle is lower and lower from the start of this data refresh to the next data refresh.

Therefore, in the embodiment of the present invention, the precise first vehicle body change angle at the moment of data refresh is selected for filtering correction of the fused change angle. At other moments, the fused change angle is used as the final vehicle body change angle for output to ensure the accuracy of calculation results and data smoothness.

In terms of filtering means, cash filtering, median value filtering, arithmetic average filtering, Kalman filtering and other methods are usually used. When the data of the first vehicle body change angle is refreshed, the data of the first vehicle body change angle at this moment is compared with the fused change angle. If the difference is large, the filtering coefficient may increase, and the finally output vehicle body change angle will be corrected to a large extent in subsequent calculation. If the difference is small, the filtering coefficient is small, and the correction amplitude of the finally output vehicle body change angle is also small in the subsequent calculation process.

In addition, since vehicle body positioning information of the previous moment is known, a vehicle body heading angle of the current moment may be directly obtained through calculation after the vehicle body change angle of the moment is clearly known.

Step 140, calculate a current vehicle body position of a vehicle according to a vehicle body position of the previous moment, the vehicle body angle of a current moment, and a vehicle driving distance.

It is to be noted that the time interval between the previous moment and the current moment is set according to the requirements of calculation accuracy, and when more accurate data is required, the interval between the two moments may be set to be very small, such as 5 ms, 10 ms and 20 ms.

The vehicle body position of the previous moment may be determined by the positioning information of the vehicle body, such as the horizontal and vertical coordinates and the vehicle body angle.

In addition, since the time interval between two moments is usually short, a calculation model may be simplified by considering the path traveled in this time interval as a straight line. The driving distance may be obtained through a variety of different systems of the vehicle, for example, the driving distance is the product of speed and time, or the driving distance is calculated through the wheel pulse signal.

After the vehicle body angle at the current moment is calculated, the coordinates of the vehicle body in the world coordinate system at the current moment may be calculated according to the trigonometric function relationship, so as to complete the update of the vehicle positioning information.

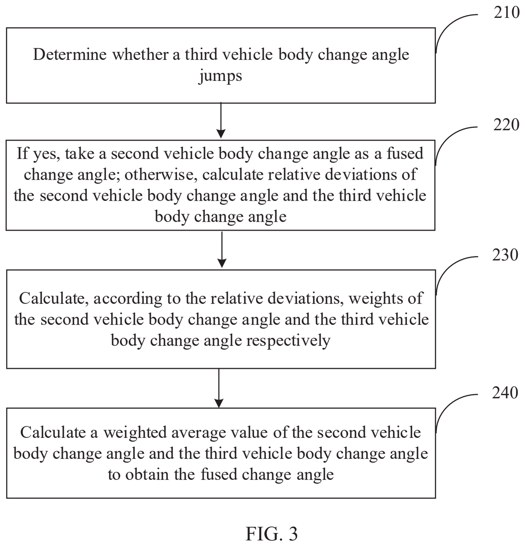

FIG. 3 shows the fusion process of the second vehicle body change angle and the third vehicle body change angle.

As an embodiment of the present invention, a specific process of data fusion for the second vehicle body change angle and the third vehicle body change angle includes the following steps.

Step 210, determine whether the third vehicle body change angle jumps.

The third vehicle body change angle comes from the inertial measurement unit. Because the inertial measurement unit calculates the change in heading angle by means of a gyroscope, an acceleration sensor, etc., a data jump is obviously prone to occurring in the process of acquiring data by the sensor. In the scenario of automatic parking, as the vehicle speed is low, it is impossible for the vehicle body angle to undergo a great change within a short period of time, so results are usually inaccurate if there is a data $j_{ump}$.

Therefore, when the third vehicle body change angle jumps, for example, suddenly becomes very large, or very small, verification is required.

The verification may be performed with the second vehicle body change angle, for example when the difference between the third vehicle body change angle and the second vehicle body change angle increases, the third vehicle body change angle may be considered to jump.

In some preferred embodiments, the verification may be performed according to the following formula:

$$|\Delta rad_2 - \Delta rad_3| > 110\% * (\Delta rad_2 + \Delta rad_3)/2$$

where $\Delta rad_2$ denotes the second vehicle body change angle, and $\Delta rad_3$ denotes the third vehicle body change angle.

If the third vehicle body change angle jumps, the data needs to be discarded. If the third vehicle body change angle does not jump, data fusion may be carried out.

Step 220, if yes, take the second vehicle body change angle as the fused change angle; otherwise, calculate relative deviations of the second vehicle body change angle and the third vehicle body change angle.

Since the third vehicle body change angle jumps and the data fusion may cause greater errors in the result, the second vehicle body change angle is directly used as the fused change angle for output.

If the third vehicle body change angle does not jump, the relative deviations of the second vehicle body change angle and the third vehicle body change angle are calculated, that is,

$$dis_2 = |\Delta rad_2 - (\Delta rad_2 - \Delta rad_3)/2|,$$

and

$$dis_3 = |\Delta rad_2 - (\Delta rad_2 - \Delta rad_3)/2|$$

where $dis_2$ the relative deviation of the second vehicle body change angle, and $dis_3$ denotes the relative deviation of the third vehicle body change angle.

Step 230, calculate, according to the relative deviations, weights of the second vehicle body change angle and the third vehicle body change angle respectively.

Normalization processing is performed by using the two relative deviation values to obtain the two weights for the second vehicle body change angle and the third vehicle body change angle, and the two weights are related to confidences thereof.

The specific calculation method is as follows:

$$factor_2 = dis_2/(dis_2 + dis_3),$$

and

$$factor_3 = dis_3/(dis_2 + dis_3),$$

where $factor_2$ denotes the weight of the second vehicle body change angle, and $factor_3$ denotes the weight of the third vehicle body change angle.

Step 240, calculate a weighted average value of the second vehicle body change angle and the third vehicle body change angle to obtain the fused change angle.

In this embodiment, the fusion calculation means that the data with higher confidence may have a larger weight and a larger impact on the fused data, so a more accurate fused change angle may be obtained by means of the weighted average value. The specific calculation method is as follows:

$$\Delta\theta = (\Delta rad_2 * factor_2) + (\Delta rad_3 * factor_3)),$$

where $\Delta\theta$ denotes the fused change angle.

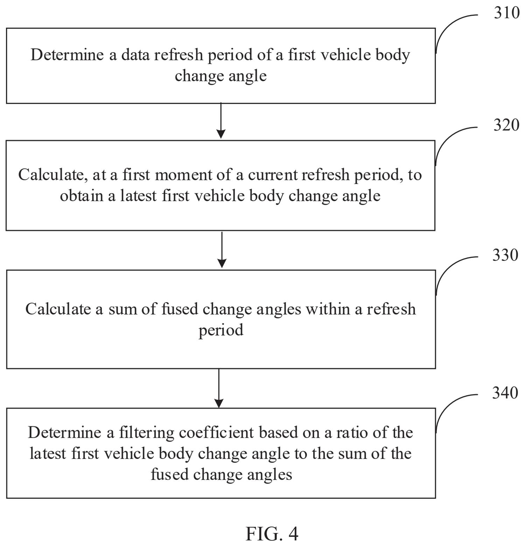

FIG. 4 provides a process of filtering the fused change angle by using the first vehicle body change angle.

As a preferred embodiment of the present invention, the method for filtering the fused change angle by using the first vehicle body change angle is specifically as follows.

It is to be noted that because the first vehicle body change angle comes from the wheel pulse signal, and when the vehicle speed is low, the update speed of the pulse signal thereof is low, the data of the first body change angle is the most accurate when refreshed, and may be used for filtering. At this time, performing filtering correction on the fused change angle through the first vehicle body change angle to obtain a corrected vehicle body change angle includes the following substeps:
Step 310, determine a data refresh period of the first vehicle body change angle.

In the scenario of automatic parking, a vehicle is driving at a low speed, which may usually be considered as uniform motion, so the period of the wheel speed pulse signal may be considered as unchanged. The time interval of the crests of two pulse signals may be determined as a refresh period, and it is understood that the time intervals of pulse signals of the same number may also be determined as a data refresh period. In addition, if the vehicle speed is obviously not uniform, the refresh period may also be determined as a change value, and the time interval between adjacent crests of pulse signals is taken as a period.

Step 320, calculate, at a first moment of a current refresh period, to obtain a latest first vehicle body change angle.

At this moment, because the driving distance of each wheel is very accurate, the first vehicle body change angle calculated at this time may be very accurate.

Step 330, calculate a sum of the fused change angles within the refresh period.

As the time interval of the refresh period is usually large, the data refresh frequency of the second vehicle body change angle and the third vehicle body change angle may be out of sync with the refresh frequency of the first vehicle body change angle. Usually, after the second vehicle body change angle and the third vehicle body change angle are refreshed several times, the first vehicle body change angle may be refreshed once.

In order to synchronize the data on the time line, the sum of the plurality of fused change angles calculated within the refresh period of the first vehicle body change angle needs to be obtained, so as to obtain the fused change angle within the refresh period.

Step 340, determine the filtering coefficient based on a ratio of the latest first vehicle body change angle to the sum of the fused change angles.

The filtering coefficient needs to consider two cases, the first case is the data refresh moment of the first vehicle body change angle, and the second case is other moments of the first vehicle body change angle except the refresh moment.

In the time when the first vehicle body change angle is not refreshed, it may be considered that the fused change angle does not need filtering, so the filtering coefficient P is determined as a constant, usually P=1.

The specific calculation method of the first vehicle body change angle at the data refresh moment is as follows:

$$P = \Delta rad_1 / \int_{t2}^{t1} \Delta \theta$$

where t1 denotes the current moment, t2 denotes the moment when the data of the first vehicle body change angle is refreshed last time, and $\Delta rad_1$ denotes the first vehicle body change angle.

Through the above method, the correction coefficient of each moment may be obtained, and the fused change angle is corrected through this calculation method before output.

Further, in the embodiment of the present invention, the vehicle body angle of the current moment is calculated according to the vehicle body angle of the previous moment.

Specifically, products of the fused change angles from the previous moment to the current moment and the filtering coefficient are integrated by means of an integration function. The specific calculation method is as follows:

$$\theta_{t1} = \theta_{t0} + \int_{t0}^{t1} P * \Delta \theta,$$

where P denotes the filtering coefficient, $\theta_{11}$ denotes the current vehicle body angle, and $\theta_{t0}$ denotes the vehicle body angle of the previous moment.

In this way, the accurate vehicle body angle at the current moment may be obtained by the above calculation method.

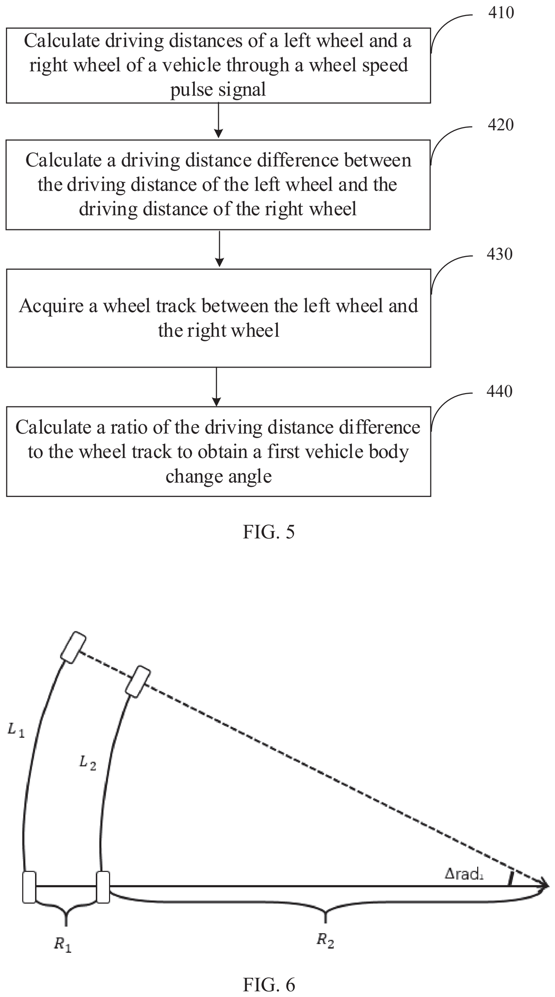

Referring to FIG. 5 and FIG. 6, FIG. 5 illustrates the process of calculating the first vehicle body change angle through the wheel speed pulse signal, and FIG. 6 illustrates a geometric model for calculating the change angle through the pulse wheel speed.

The process specifically includes the following steps:
Step 410, calculate driving distances of a left wheel and a right wheel of the vehicle through the wheel speed pulse signal.

Taking FIG. 6 as an example, FIG. 6 illustrates a geometric model of the process of a vehicle making a right turn. Therefore, $L_1$ denotes the driving distance of the left wheel, $L_2$ denotes the driving distance of the right wheel, $R_1$ denotes the wheel track, and $R_2$ denotes the distance from the center of the curve to the right wheel.

According to the geometric model, the driving distance of the left wheel is

$$L_1 = \Delta rad_1 * (R_1 + R_2)_{\circ}$$

the driving distance of the right wheel is

$$L_2 = \Delta rad_1 * R_2.$$

Since the driving distances of the left wheel and the right wheel may be calculated directly through the wheel speed pulse signal, the driving distances are known in the above calculation formula.

Step 420, calculate a driving distance difference between the driving distance of the left wheel and the driving distance of the right wheel.

That is,

$$L_1 - L_2 = \Delta rad_1 * R_1$$

Step 430, acquire a wheel track between the left wheel and the right wheel.

In the formula of step 420, the driving distance difference between the driving distance of the left wheel and the driving distance of the right wheel may be directly calculated, and the wheel track $R_1$ is known and may be directly obtained. At this time, the first vehicle body change may be solved by further calculation.

Step 440, calculate a ratio of the driving distance difference to the wheel track to obtain the first vehicle body change angle.

The specific calculation method is as follows:

$$\Delta rad_1 = \frac{L_1 - L_2}{R_1}$$

Thus, the first vehicle body change angle may be obtained.

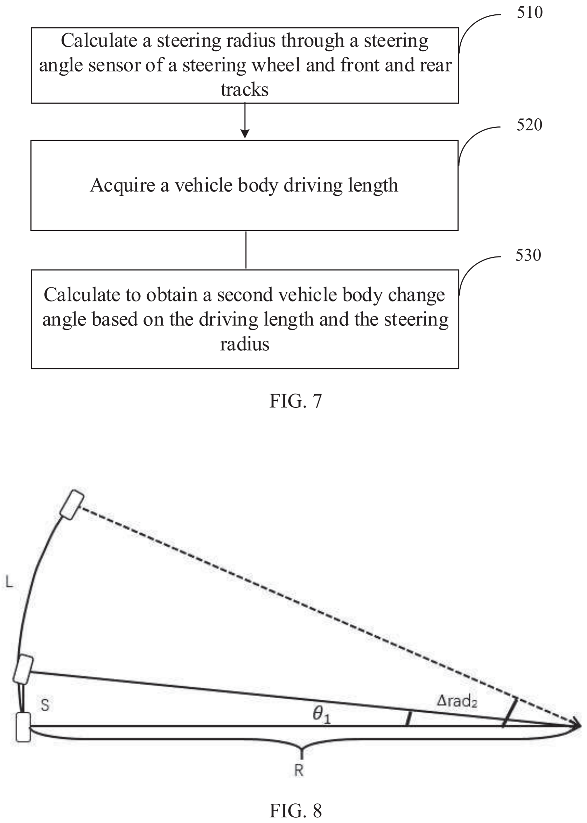

Referring to FIG. 7 and FIG. 8, FIG. 7 illustrates the process of calculating the first vehicle body change angle through the steering wheel signal, and FIG. 8 illustrates a geometric model for calculating the change angle through the steering wheel signal.

The process of calculating the second vehicle body change angle through the steering wheel signal includes the following steps:

Step 510, calculate a steering radius through a steering angle sensor of a steering wheel and front and rear tracks.

First, the steering ratio may be obtained by real vehicle calibration, so the fitted wheel angle $\theta_1$ may be obtained through the steering angle sensor (SAS) of the steering wheel of the vehicle and the steering ratio of the vehicle, that is

$$\theta_1 = SAS_{angle}/ratio$$

where $SAS_{angle}$ denotes the angle of the steering wheel, and *ratio* denotes the steering ratio.

Afterwards, in FIG. 8, S denotes the front and rear tracks of the vehicle, and the wheel tracks are constants, which may be obtained according to vehicle body parameters. The steering radius may be obtained by using the trigonometric function.

$$R = S/\tan(\frac{\theta_1}{180} * \pi)$$

Step 520, acquire a vehicle body driving length.

The vehicle body driving length L may be obtained in various ways, such as the wheel speed pulse signal, the vehicle speed signal, and high-precision positioning, which will not be repeated in this embodiment.

Step 530, calculate to obtain the second vehicle body change angle based on the driving length and the steering radius.

The radian formula may be adopted for calculation, with the specific calculation method being as follows:

$$\Delta rad_2 = L/R$$

Thus, the second vehicle body change angle may be obtained.

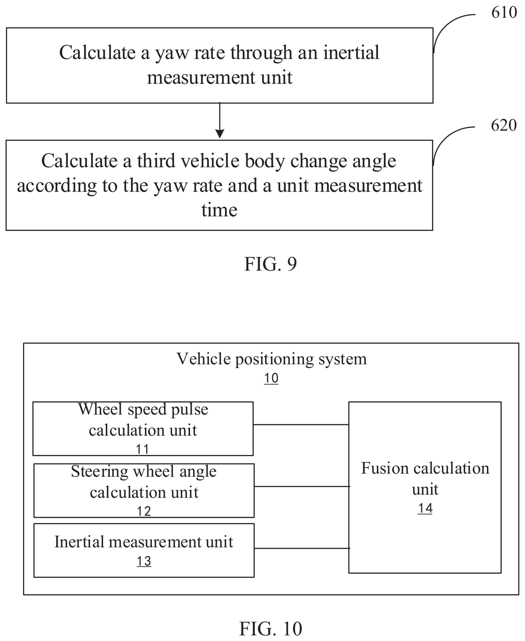

Referring to FIG. 9, FIG. 9 illustrates the process of calculating the third vehicle body change angle through the inertial measurement unit.

The process of calculating the third vehicle body change angle through the inertial measurement unit includes the following steps:

Step 610, calculate a yaw rate through the inertial measurement unit.

The yaw rate may be understood as the deviation amplitude of the vehicle heading angle in unit time. The larger the deviation amplitude, the larger the variation amplitude of the vehicle body angle; otherwise, the variation amplitude of the vehicle body angle is decreased.

Step 620, calculate the third vehicle body change angle according to the yaw rate and a unit measurement time.

Due to the high sampling rate of the inertial measurement unit, the cumulative yaw amplitude may be calculated according to the measurement period in the calculation process.

For example, in the sampling period of the inertial measurement unit, the yaw amplitude is 0.1°, and the period of the system to calculate the change of the vehicle body angle is 10 times the sampling period of the inertial measurement unit, so it may be calculated that the change of the vehicle body angle is 0.1°*10=1° during the period of the system to calculate the change of the vehicle body angle.

Thus, the third vehicle body change angle may be obtained.

Referring to FIG. 1, according to the model in FIG. 1, in some embodiments of the present invention, the process of calculating the current vehicle body position of the vehicle according to the vehicle body position of the previous moment, the vehicle body angle of the current moment, and the vehicle driving distance is as follows:

calculating a vehicle driving length within the unit measurement time.

The driving length may be calculated according to the wheel speed pulse signal, which may clearly know the driving distances of the left wheel and the right wheel of the vehicle. Thus, the driving distance may be obtained by calculating the average value thereof, that is,

$$L = \frac{L_1 + L_2}{2}$$

where L denotes the vehicle driving length within the unit measurement time, $L_1$ denotes the driving distance of the left wheel, and $L_2$ denotes the driving distance of the right wheel.

The angle average value of the vehicle body angle of the previous moment and the vehicle body angle of the current moment is calculated.

It is generally believed that in a relatively short period of time, such as 20 ms, the driving route of the vehicle may be approximately regarded as a straight line, so the angle of the driving route may also be calculated, and the driving direction may be obtained by the average value of the vehicle body angles at two moments.

The current coordinates of the vehicle body are calculated by the trigonometric function using the vehicle body position of the previous moment, the angle average value and the vehicle driving length.

When the driving route of the vehicle is approximated as a straight line and the driving direction of the vehicle is known, the following calculation is performed using the trigonometric function relationship to obtain the vehicle body coordinates of the current moment:

$$x = \sin((\theta_{t0} + \theta_{t1})/2) * L$$

$$y = \cos((\theta_{t0} + \theta_{t1})/2) * L,$$

where $\theta_{t1}$ denotes the current vehicle body angle, $\theta_{t0}$ denotes the vehicle body angle of the previous moment, and L denotes the vehicle driving length within the unit measurement time.

Embodiment 2:

The present invention further provides a vehicle positioning system based on multi-data fusion, as shown in FIG. 10, which illustrates the structure of the vehicle positioning system based on multi-data fusion.

The vehicle positioning system 10 based on multi-data fusion includes:

a wheel speed pulse calculation unit 11, configured to calculate a first vehicle body change angle through a driving length difference between wheels on both sides of a vehicle body;

a steering wheel angle calculation unit 12, configured to calculate a second vehicle body change angle through a steering wheel signal;

an inertial measurement unit 13, configured to measure a third vehicle body change angle; and

a fusion calculation unit 14, configured to perform data fusion on the second vehicle body change angle and the third vehicle body change angle, and perform filtering correction on a fused change angle obtained after the fusion through the first vehicle body change angle to obtain an accurate vehicle body change angle.

In addition, the fusion calculation unit 14 is configured to calculate a current vehicle body position of a vehicle according to the vehicle body change angle and a vehicle body position of a previous moment.

In embodiments of the present application, the vehicle positioning system belongs to the same idea as the vehicle positioning method in the above embodiments, and any of the steps provided in the vehicle positioning method embodiments may be implemented on the vehicle positioning system, the specific implementation process of which is described in detail in the vehicle positioning method embodiments and may be used in any combination to form an optional embodiment of the present application, and will not be further described herein.

Embodiment 3:

The present invention further provides a vehicle terminal. The vehicle terminal includes: a memory, a processor and a data processing program stored in the memory and capable of running on the processor. The data processing program, when executed by the processor, implements the vehicle positioning method based on multi-data fusion according to Embodiment 1 described above.

A person of ordinary skill in the art may understand that all or some of the steps in the various methods of the above embodiments may be accomplished by a program to instruct the relevant hardware, which may be stored in a computer-readable storage medium, and the storage medium may include: a read only memory (ROM), a random access memory (RAM), a disk or a diskette, and the like.

The above are only preferred embodiments of the present invention and are not intended to limit the present invention. Any modification, equivalent replacement and improvement, etc. made within the spirit and principle of the present invention shall be included in the protection scope of the present invention.

**Claims**

1. A vehicle positioning method based on multi-data fusion, **characterized in that** the method comprises the following steps:

    calculating a first vehicle body change angle through a wheel speed pulse signal, calculating a second vehicle body change angle through a steering wheel signal, and calculating a third vehicle body change angle through an inertial measurement unit;
    performing data fusion on the second vehicle body change angle and the third vehicle body change angle to obtain a fused change angle;
    performing, when data of the first vehicle body change angle is refreshed, filtering correction on the fused change angle through the first vehicle body change angle to obtain a filtering coefficient, and calculating a current vehicle body angle according to a vehicle body angle of a previous moment; and
    calculating a current vehicle body position of a vehicle according to a vehicle body position of the previous moment, the vehicle body angle of a current moment, and a vehicle driving distance.

2. The vehicle positioning method based on multi-data fusion according to claim 1, **characterized in that** the performing, when data of the first vehicle body change angle is refreshed, filtering correction on the fused change angle through the first vehicle body change angle to obtain a corrected vehicle body change angle comprises the following substeps:

    determining a data refresh period of the first vehicle body change angle;
    calculating, at a first moment of a current refresh period, to obtain a latest first vehicle body change angle;
    calculating a sum of the fused change angles within the refresh period; and
    determining the filtering coefficient according to a ratio of the latest first vehicle body change angle to the sum of the fused change angles.

3. The vehicle positioning method based on multi-data fusion according to claim 2, **characterized in that** the calculating a current vehicle body angle according to a vehicle body angle of a previous moment comprises:
integrating products of the fused change angles from the previous moment to the current moment and the filtering coefficient by adopting an integration function.

4. The vehicle positioning method based on multi-data fusion according to claim 3, **characterized in that** the calculating a current vehicle body angle according to a vehicle body angle of a previous moment specifically comprises:

$$\theta_{t1} = \theta_{t0} + \int_{t0}^{t1} p * \Delta\theta,$$

where P denotes the filtering coefficient, $\theta_{t1}$ denotes the current vehicle body angle, and $\theta_{t0}$ denotes the vehicle body angle of the previous moment;
when the data of the first vehicle body change angle $\Delta rad_1$ is refreshed, the filtering coefficient is:

$$P = \Delta rad_1 / \int_{t2}^{t1} \Delta\theta,$$

where t1 denotes the current moment, and t2 denotes a moment when the data of the first vehicle body change angle is refreshed last time; and
when the data of the first vehicle body change angle is not refreshed, the filtering coefficient is:

$$P = 1.$$

5. The vehicle positioning method based on multi-data fusion according to claim 1, **characterized in that** the performing data fusion on the second vehicle body change angle and the third vehicle body change angle to obtain a fused change angle comprises the following substeps:

    determining whether the third vehicle body change angle jumps;
    if yes, taking the second vehicle body change angle as the fused change angle; otherwise, calculating relative deviations of the second vehicle body change angle and the third vehicle body change angle;
    calculating, according to the relative deviations, weights of the second vehicle body change angle and the third vehicle body change angle respectively; and
    calculating a weighted average value of the second vehicle body change angle and the third vehicle body change angle to obtain the fused change angle.

6. The vehicle positioning method based on multi-data fusion according to claim 1, **characterized in that** the calculating a first vehicle body change angle through a wheel speed pulse signal comprises the following steps:

calculating driving distances of a left wheel and a right wheel of the vehicle through the wheel speed pulse signal;

calculating a driving distance difference between the driving distance of the left wheel and the driving distance of the right wheel;

acquiring a wheel track between the left wheel and the right wheel; and

calculating a ratio of the driving distance difference to the wheel track to obtain the first vehicle body change angle.

7. The vehicle positioning method based on multi-data fusion according to claim 1, **characterized in that** the calculating a second vehicle body change angle through a steering wheel signal comprises the following steps:

calculating a steering radius through a steering angle sensor of a steering wheel and front and rear tracks;

acquiring a vehicle body driving length; and

calculating to obtain the second vehicle body change angle based on the driving length and the steering radius.

8. The vehicle positioning method based on multi-data fusion according to claim 1, **characterized in that** the calculating a third vehicle body change angle through an inertial measurement unit comprises the following steps:

calculating a yaw rate through the inertial measurement unit; and

calculating the third vehicle body change angle according to the yaw rate and a unit measurement time.

9. The vehicle positioning method based on multi-data fusion according to claim 1, **characterized in that** the calculating a current vehicle body position of a vehicle according to a vehicle body position of the previous moment, the vehicle body angle of a current moment, and a vehicle driving distance comprises:

calculating a vehicle driving length within the unit measurement time;

calculating an angle average value of the vehicle body angle of the previous moment and the vehicle body angle of the current moment; and

calculating current coordinates of the vehicle body through a trigonometric function based on the vehicle body position of the previous moment, the angle average value and the vehicle driving length.

10. A vehicle positioning system based on multi-data fusion, **characterized in that** the system comprises:

a wheel speed pulse calculation unit, configured to calculate a first vehicle body change angle through a driving length difference between wheels on both sides of a vehicle body;

a steering wheel angle calculation unit, configured to calculate a second vehicle body change angle through a steering wheel signal;

an inertial measurement unit, configured to measure a third vehicle body change angle; and

a fusion calculation unit, configured to perform data fusion on the second vehicle body change angle and the third vehicle body change angle, and perform filtering correction on a fused change angle obtained after the fusion through the first vehicle body change angle to obtain an accurate vehicle body change angle,

wherein the fusion calculation unit is further configured to calculate a current vehicle body position of a vehicle according to the vehicle body change angle and a vehicle body position of a previous moment.

11. A vehicle terminal, **characterized in that** the vehicle terminal comprises a memory, a processor and a data processing program stored on the memory and capable of running on the processor, and the data processing program, when executed by the processor, implements the vehicle positioning method according to any one of claims 1 to 9.

FIG. 1

Calculate a first vehicle body change angle through a wheel speed pulse signal, calculate a second vehicle body change angle through a steering wheel signal, and calculate a third vehicle body change angle through an inertial measurement unit

— 110

Perform data fusion on the second vehicle body change angle and the third vehicle body change angle to obtain a fused change angle

— 120

Perform, when data of the first vehicle body change angle is refreshed, filtering correction on the fused change angle through the first vehicle body change angle to obtain a filtering coefficient, and calculate a current vehicle body angle according to a vehicle body angle of a previous moment

— 130

Calculate a current vehicle body position of a vehicle according to a vehicle body position of the previous moment, the vehicle body angle of a current moment, and a vehicle driving distance

— 140

FIG. 2

210

Determine whether a third vehicle body change angle jumps

220

If yes, take a second vehicle body change angle as a fused change angle; otherwise, calculate relative deviations of the second vehicle body change angle and the third vehicle body change angle

230

Calculate, according to the relative deviations, weights of the second vehicle body change angle and the third vehicle body change angle respectively

240

Calculate a weighted average value of the second vehicle body change angle and the third vehicle body change angle to obtain the fused change angle

FIG. 3

Determine a data refresh period of a first vehicle body change angle — 310

Calculate, at a first moment of a current refresh period, to obtain a latest first vehicle body change angle — 320

Calculate a sum of fused change angles within a refresh period — 330

Determine a filtering coefficient based on a ratio of the latest first vehicle body change angle to the sum of the fused change angles — 340

FIG. 4

410

Calculate driving distances of a left wheel and a right wheel of a vehicle through a wheel speed pulse signal

420

Calculate a driving distance difference between the driving distance of the left wheel and the driving distance of the right wheel

430

Acquire a wheel track between the left wheel and the right wheel

440

Calculate a ratio of the driving distance difference to the wheel track to obtain a first vehicle body change angle

FIG. 5

$L_1$

$L_2$

$\Delta rad_1$

$R_1$

$R_2$

FIG. 6

| | 510 |
|---|---|
| Calculate a steering radius through a steering angle sensor of a steering wheel and front and rear tracks | |

↓

| | 520 |
|---|---|
| Acquire a vehicle body driving length | |

| | 530 |
|---|---|
| Calculate to obtain a second vehicle body change angle based on the driving length and the steering radius | |

FIG. 7

FIG. 8

610

Calculate a yaw rate through an inertial
measurement unit

620

Calculate a third vehicle body change angle
according to the yaw rate and a unit measurement
time

FIG. 9

Vehicle positioning system
10

| Wheel speed pulse calculation unit 11 | Fusion calculation unit 14 |
| Steering wheel angle calculation unit 12 | |
| Inertial measurement unit 13 | |

FIG. 10

**EP 4 653 816 A1**

## INTERNATIONAL SEARCH REPORT

| International application No. |
|---|
| **PCT/CN2023/121327** |

| A. | CLASSIFICATION OF SUBJECT MATTER |
|---|---|

G01C21/28(2006.01)i; G01C21/16(2006.01)i; G01C21/18(2006.01)i

According to International Patent Classification (IPC) or to both national classification and IPC

| B. | FIELDS SEARCHED |
|---|---|

Minimum documentation searched (classification system followed by classification symbols)

IPC:G01C

Documentation searched other than minimum documentation to the extent that such documents are included in the fields searched

Electronic data base consulted during the international search (name of data base and, where practicable, search terms used)

CNTXT; ENTXTC; VEN; ENTXT; CNKI; IEEE: 轮速, 阿克曼, 方向盘, 转向, 惯性, 传感器, 自动, 泊车, 融合, 协同, 更新, 刷新, 滤波, 角度, 位置, 脉冲, 周期, 频率, 校正, wheelspeed, ackermann, wheel, steering, IMU, automatic, parking, fusion, collaborat+, update, refresh, filter+, angle, position, pulse, cycle, frequency, correct+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116295458 A (HUIZHOU DESAY SV AUTOMOTIVE CO., LTD.) 23 June 2023 (2023-06-23) description, paragraphs [0006]-[0204] | 1-11 |
| A | CN 114407877 A (BEIJING LIUMA RUICHI TECHNOLOGY CO., LTD.) 29 April 2022 (2022-04-29) description, paragraphs [0032]-[0058] | 1-11 |
| A | CN 114475581 A (BEIJING LIUMA RUICHI TECHNOLOGY CO., LTD.) 13 May 2022 (2022-05-13) entire document | 1-11 |
| A | CN 111907516 A (GUANGZHOU AUTOMOBILE GROUP CO., LTD.) 10 November 2020 (2020-11-10) entire document | 1-11 |
| A | DE 102013209853 A1 (ROBERT BOSCH GMBH) 27 November 2014 (2014-11-27) entire document | 1-11 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2023/121327** |

| Patent document cited in search report | | | Publication date (day/month/year) | Patent family member(s) | Publication date (day/month/year) |
|---|---|---|---|---|---|
| CN | 116295458 | A | 23 June 2023 | None | |
| CN | 114407877 | A | 29 April 2022 | None | |
| CN | 114475581 | A | 13 May 2022 | None | |
| CN | 111907516 | A | 10 November 2020 | None | |
| DE | 102013209853 | A1 | 27 November 2014 | None | |

Form PCT/ISA/210 (patent family annex) (July 2022)